# EUROPÄISCHE PATENTANMELDUNG

(11) **EP 0 989 391 A2**
(43) Veröffentlichungstag der Anmeldung: **29.03.2000**
(21) Anmeldenummer: 99114481.7
(22) Anmeldetag: 23.07.1999
(51) Int. Cl.: G01J 5/20

(54) **Sensorelement sowie Verfahren zur bolometrischen Messung der Intensität von Infraforlicht**

(30) Priorität: 23.09.1998 DE 19843599
(71) Anmelder: DORNIER GmbH, 88039 Friedrichshafen (DE)
(72) Erfinder: Rothmund, Walter, Dr., 93142 Maxhütte-Haidhof (DE); Schlag, Harald, 88045 Friedrichshafen (DE); Scherber, Werner, Dr., 88697 Bermatingen (DE)
(74) Vertreter: Meel, Thomas

(57) **Zusammenfassung**

Die Erfindung betrifft ein Sensorelement zur bolometrischen Messung der Intensität von Infrarotlicht der Wellenlänge 5 µm bis 30 µm. Es umfaßt
- ein wärmeleitfähiges Substrat (1);
- einen Meßwiderstand (5) aus einem Halbleiter-Metall-Phasenübergangsmaterial, der von dem Substrat (1) durch eine Wärmeisolationsschicht (6)getrennt ist,
- einen auf dem Substrat (1) aufgebrachten Referenzwiderstand (4) aus dem gleichen Material wie der Meßwiderstand (5),
- einen auf dem Substrat (1) aufgebrachten Heizwiderstand (2),
- einen auf dem Substrat (1) aufgebrachten Widerstand (3) zur Temperaturmessung.
Ein Meßverfahren unter Einsatz des erfindungsgemäßen Sensorelements ist ebenfalls Gegenstand der Patentanmeldung.

## Beschreibung

Die Erfindung betrifft ein Sensorelement sowie ein Verfahren zur bolometrischen Messung der Intensität von Infrarotlicht. Unter Infrarotlicht (Infrarot wird im folgenden auch mit IR abgekürzt) wird in dieser Anmeldung insbesondere der Wellenlängenbereich von 5 µm bis ca. 30 µm verstanden.

In der Infrarot-Technik sind eine breite Palette verschiedenartiger Sensoren bekannt. Einfache IR-Bewegungsmelder auf der Basis pyroelektrischer Sensoren zum Beispiel sind sehr kostengünstig herzustellen, reagieren jedoch nur auf Veränderungen der Intensität der einfallenden Wärmestrahlung. Andere thermoelektrische Sensoren wie Bolometer, Thermocouples etc. benötigen in der Regel eine aufwendige und daher kostenintensive thermische Isolierung der Pixel und Temperaturstabilisierung. Zur Erlangung hoher Empfindlichkeiten müssen die Sensoren zudem meist gekühlt werden. Photonische Detektoren wie z. B. Quantum Weil Detektoren sind mit aufwendigen Depositionsmethoden hergestellte ebenfalls teuere Multischichtdetektoren. In dem Bereich zwischen den einfachen weitverbreiteten pyroelektrischen Sensoren und den hochwertigen, bildgebenden IR-Sensoren existiert ein Bedarf an kostengünstig herzustellenden und mit einfachen Mitteln zu betreibenden IR-Sensoren mittlerer Leistungsfähigkeit, die auch zu bildgebenden Kleinarrays integrierbar sind. Solche Sensoren könnten als Massenprodukt neue Märkte in der Infrarottechnik erschließen.

Bei den bereits erwähnten IR-Sensorelementen, die nach dem bolometrischen Prinzip arbeiten, wird die einfallende IR-Strahlung in einer geeigneten Schicht, die auf einem Trägersubstrat angeordnet ist, absorbiert. Die Absorption der IR-Strahlung führt zu einer Temperaturerhöhung in einem Meßwiderstand, dessen temperaturabhängiger Widerstandswert die Meßgröße darstellt. Um eine hinreichende Empfindlichkeit einer solchen Anordnung zu erreichen, wird üblicherweise die Wärmekapazität des empfindlichen Elementes so gering wie möglich gehalten (sehr dünne freitragende Membranen) und die thermische Ankopplung an das Trägersubstrat niedrig gehalten. Dieses Prinzip ist technologisch sehr aufwendig und daher teuer.

Aufgabe der Erfindung ist es, ein einfach aufgebautes und daher kostengünstig herzustellendes Sensorelement für die bolometrische Messung von IR-Strahlung (Wellenlänge typischerweise zwischen 5 µm und 30 µm) zu schaffen, das zu seinem Betrieb weder gekühlt noch thermisch stabilisiert zu werden braucht.

Diese Aufgabe wird mit dem Sensorelement nach Anspruch 1 gelöst. Vorteilhafte Ausführungen sowie eine Meßverfahren unter Einsatz des erfindungsgemäßen Sensorelements sind Gegenstand weiterer Ansprüche.

Gemäß der Erfindung wird die einfallende Strahlung in einer geeigneten Schicht absorbiert und dadurch in einem Meßwiderstand eine Temperaturerhöhung hervorgerufen, dessen temperaturabhängiger Widerstandswert die Meßgröße darstellt. Um eine hinreichende Empfindlichkeit einer solchen Anordnung zu erreichen, ist der Meßwiderstand erfindungsgemäß aus einem Material mit extrem hohem Temperaturgang. Diese sogenannten Phasenübergangsmaterialien (im folgenden auch mit PÜM abgekürzt) zeichnen sich dadurch aus, daß sie innerhalb eines wenige Grad Celsius breiten Temperaturintervalles einen Phasenübergang vom Halbleiter zum Metall durchlaufen, wobei sich der elektrische Widerstand typischerweise um 4 - 5 Größenordnungen ändert. Vorteilhaft werden solche PÜM eingesetzt, deren elektrische Leitfähigkeit σ in einem Bereich zwischen 10² und 10⁶ Ω⁻¹cm⁻¹ variiert. Vorteilhaft sollte die Übergangstemperatur des PÜM höher als Raumtemperatur sein. VO₂ und Ti₂O₃ erfüllen beide Anforderungen und sind deshalb für die Anwendung gemäß der Erfindung besonders geeignet.

Das erfindungsgemäße Sensorelement besitzt gegenüber den bekannten, auf dem Bolometerprinzip beruhenden IR-Sensoren folgende Vorteile:
- Es besitzt einen dünnschichttechnisch einfach herzustellenden Aufbau, der ohne freitragende sehr aufwendig herzustellende dünne Brücken geringer Wärmekapazität auskommt, wie sie sonst bei bolometrischen Sensoren üblich sind. Dadurch können mit einfachen Prozeßschritten kostengünstig große Stückzahlen gefertigt werden.
- Eine aufwendige Kühlung und Temperaturstabilisierung des Sensorelements entfällt.
- Eine Integration zu Pixelstrings bzw. Pixelarrays ist möglich.
- Die berührungslose Messung von Temperaturen ist möglich.

Trotz dieser Vorteile ist die Meßempfindlichkeit des erfindungsgemäßen Sensorelements gegenüber den bekannten gekühlten Meßsystemen nur wenig geringer.

Die Erfindung wird anhand von Ausführungsbeispielen unter Bezugnahme auf Zeichnungen näher erläutert. Es zeigen:
- Fig. 1: ein erfindungsgemäßen Sensorelement;
- Fig. 2: den hysteretischen Phasenübergang eines PÜM, wobei der spezifische Widerstand über der Temperatur aufgetragen ist;
- Fig. 3: Mikrohysteresen im Phasenübergangsbereich eines PÜM;
- Fig. 4: den zeitlichen Temperaturverlauf des Substrats bei Durchführung des erfindungsgemäßen Meßverfahrens;
- Fig. 5: die zeitlichen Temperaturverläufe des Referenzwiderstandes und Meßwiderstandes bei Durchführung des erfindungsgemäßen Meßverfahrens.

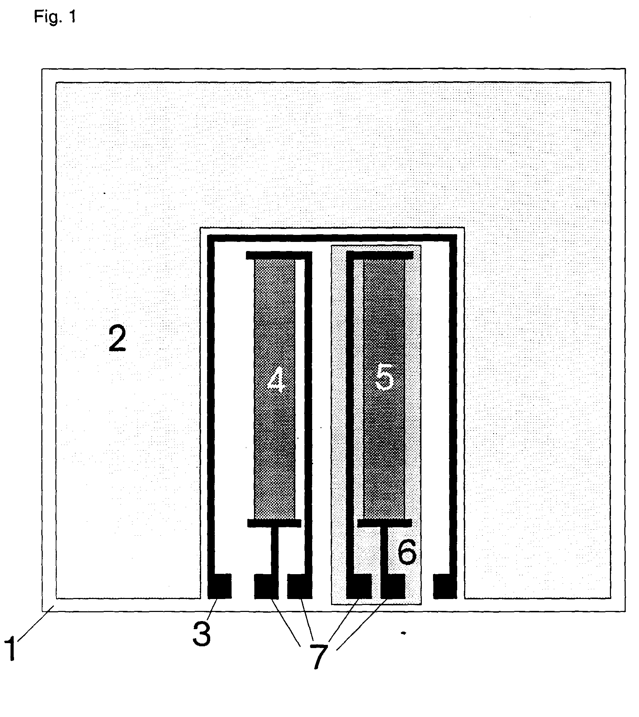

Fig. 1 zeigt den grundlegenden Aufbau des erfindungsgemäßen Sensorelements. Ein Substrat 1, das eine gute thermische Leitfähigkeit besitzt, wird durch einen Heizwiderstand 2 so beheizt, daß die Oberfläche des Substrats 1 in sehr guter Näherung eine Äquitemperaturfläche darstellt. Das Substrat, im folgenden auch als Träger bezeichnet, kann z.B. aus poliertem Si, Ge, Saphir, Diamant, SiC, SiN, AlN oder anderen hochohmigen guten Wärmeleitern bestehen. Die Temperatur des Substrats 1 wird mit dem Widerstand 3, der ebenfalls auf dem Substrat aufgebracht ist, bestimmt. Zur Strahlungsmessung dienen zwei aus demselben PÜM bestehende Widerstände (Meßwiderstand 5, Referenzwiderstand 4) wobei der Widerstand 4 direkt an das Wärmebad des Trägers 1 gekoppelt ist. Er dient als Referenz für die Intensitätsmessung und soll möglichst keine IR-Strahlung absorbieren. Dies kann z.B. durch einen mechanische Abdeckung erreicht werden oder indem ein Material verwendet wird, das keine oder nur eine sehr geringe IR-Absorptionsfähigkeit aufweist. Der Meßwiderstand 5 ist durch eine dicke Wärmeisolationsschicht 6 mit möglichst geringer Wärmeleitfähigkeit und Wärmekapazität vom Wärmebad des Substrats 1 getrennt.

Zusätzlich kann auf dem Meßwiderstand 5 eine dünne, hier nicht dargestellte IR-Absorberschicht aufgebracht sein. In diesem Fall können die Widerstände 4 und 5 aus einem Material bestehen, das selbst nur eine geringe oder überhaupt keine IR-Absorptionsfähigkeit aufweist.

Die Dicke der Isolationsschicht 6 ist bevorzugt größer als 10 µm. Sie kann z.B. aus Polyimid, LaF₃ oder CsBr bestehen. Der Heizwiderstand 2, der Widerstand 3 zur Temperaturmessung oder die Anschlußpads 7 für Meßwiderstand 5 oder Referenzwiderstand 4 können bevorzugt aus Au, Pt, Pd, Al oder Cu bestehen.
Die Absorption von IR-Strahlung führt nun im Meßwiderstand 5 durch die schlechte thermische Ankopplung via Wärmeisolationsschicht 6 an das Substrat 1 zu einer geringen Temperaturerhöhung, die mit der Temperatur des Referenzwiderstands 4 verglichen wird und so ein Maß für die Intensität der absorbierten IR-Strahlung liefert. Diese Temperaturerhöhung fällt um so höher aus, je schlechter die Wärmeleitfähigkeit der Schicht 6 ist bzw. je dicker die Schicht 6 gewählt wird. Um den sehr hohen Temperaturgang des PÜM ausnutzen zu können, muß die Messung bei einer Trägertemperatur vorgenommen werden, die in dem Temperaturintervall des Phasenüberganges des PÜM liegt.

Auf der Basis eines erfindungsgemäßen Sensorelements können sehr kostengünstig Sensorarrays für die bildgebende IR-Messung hergestellt werden. Zu diesem Zweck genügt es, auf einem z. B. rückwärtig beheizten Substrat einen Referenzwiderstand und ein Array von Meßwiderständen mit den zugehörigen Isolationsschichten aufzubringen, wobei alle Meßwiderstände mit dem Referenzwiderstand verglichen und sequentiell ausgelesen werden. Damit sind Low Cost Wärmebildkameras möglich, die z.B. in der Kfz-Technik (Out of Position Sensor, Insassenüberwachung), in der Objektüberwachung, der Mustererkennung, der Verkehrstechnik u. v. m. eingesetzt werden können.

Im folgenden wird ein vorteilhaftes Meßverfahren, mit dem die Strahlungsmessung unter Einsatz des erfindungsgemäßen Sensorelements durchgeführt wird, beschrieben.

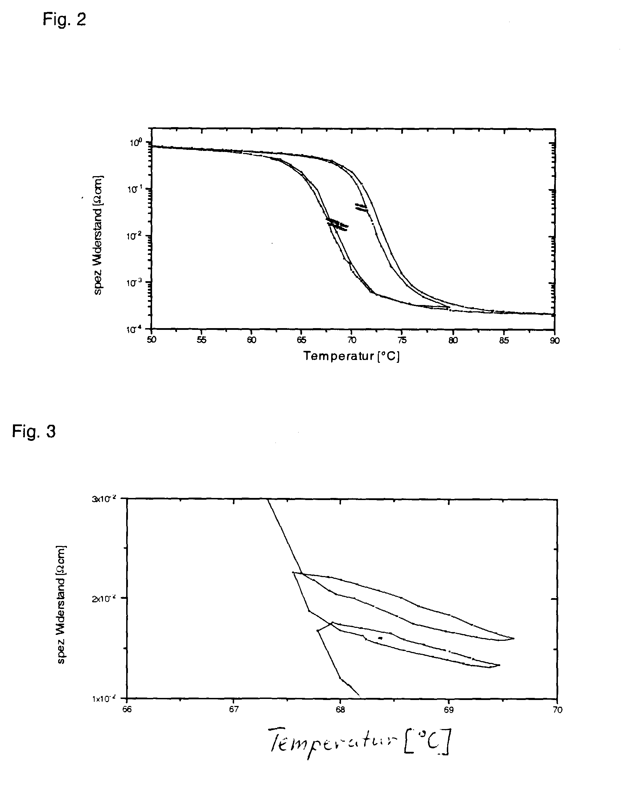

Der Phasenübergang der eingesetzten Phasenübergangsmaterialien besitzt, wie in Fig. 2 dargestellt, ein hysteretisches Verhalten. Hysteretische Kennlinien stellen in der Meßtechnik ein grundsätzliches Problem dar, da ein Arbeitspunkt je nach der Vorgeschichte auf verschiedenen Wegen erreicht werden kann, was eine eindeutige Zuordnung eines Signals zu einer Meßgröße unmöglich macht. Das hier beschriebene Meßverfahren umgeht dieses Problem und erschließt ganz allgemein den steilen, nichtlinearen Bereich der Kennlinie im Bereich der Hysterese. Da bei kleinen Temperaturänderungen im Übergangsbereich Mikrohysteresen auftreten (siehe Fig. 3), muß man, um die hohe Steilheit der Kennlinie ausnutzen zu können, den Phasenübergang periodisch überstreichen, um dann bei einer definierten Temperatur (oder analog: einem definierten Widerstandswert) des Referenzwiderstands 4 die Messung durchzuführen.

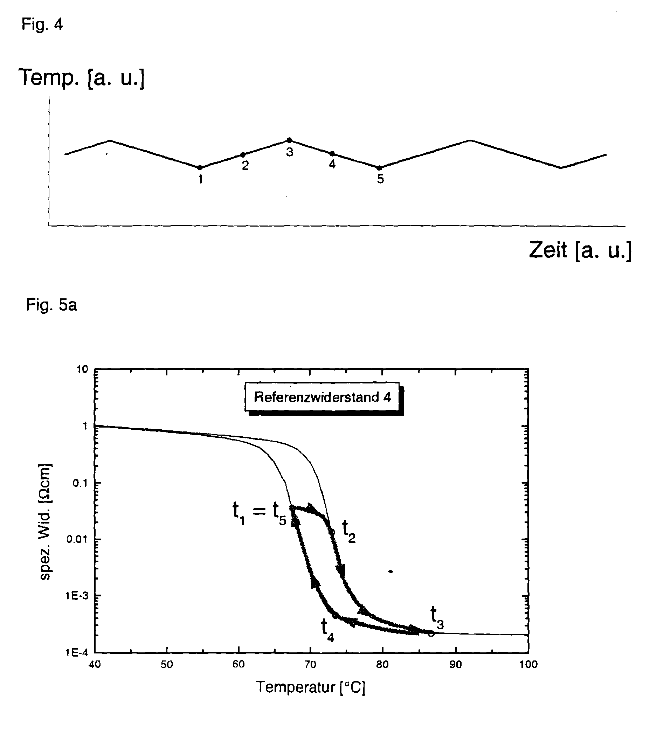

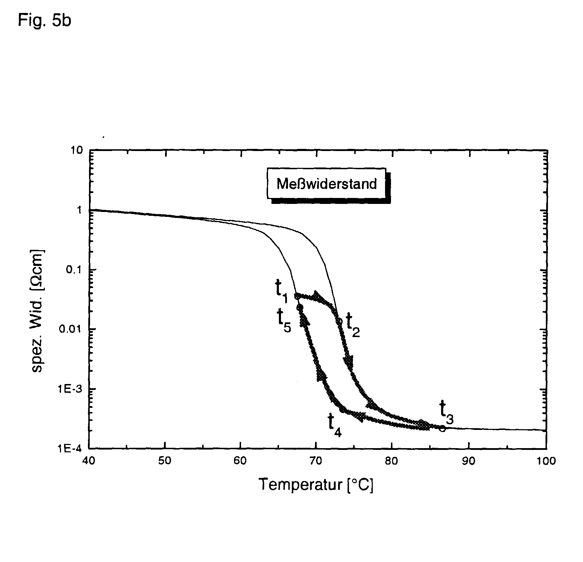

Der Heizwiderstand 2 wird zur Messung von einem periodischen Heizstrom durchflossen, so daß die Temperatur des Trägers 1, bestimmt durch den Widerstand 3 zur Temperaturmessung, periodisch den Phasenübergang des PÜM überstreicht. Der zeitliche Verlauf der Temperatur des Trägers 1 ist dargestellt in Fig. 4. Der Referenzwiderstand 4 folgt dann diesem Temperaturverlauf (siehe Fig. 5a; an den Meßkurven von Fig. 4 und Fig. 5 sind einzelne Zeitpunkte t1 bis t5 als Parameter eingezeichnet). Die Wiederholrate dieses Vorgangs darf nur so groß sein, daß zu jeder Zeit das System in einem stationären thermischen Gleichgewichtszustand ist. Praktikable Raten liegen bei 1 - 10 Hz. Der Meßwiderstand 5 folgt ebenfalls dem Verlauf, jedoch um eine kleine Temperaturdifferenz versetzt gegenüber dem Referenzwiderstand 4, da er schlecht thermisch an das Substrat 1 angekoppelt ist und mit der Umgebung durch Strahlung und eventuell Konvektion Wärme austauscht. Die Situation ist wiedergegeben in Figur 5b. Nimmt man also auf der Kurve des Referenzwiderstands 4 (Fig. 5a) das Erreichen eines bestimmten festen Widerstandswert (hier z.B. zum Zeitpunkt t5) als Trigger für die Messung am Meßwiderstand 5, so ist der entsprechende Widerstandswert auf der Kurve des Meßwiderstandes 5 zum Zeitpunkt t5 in Fig. 5b abhängig von der Intensität des einfallenden und absorbierten Infrarotlichtes. Je größer die Intensität der IR-Strahlung, desto größer die Differenz der Widerstandswerte von Meßwiderstand 5 und Referenzwiderstand 4. Da man bei diesem Verfahren die Hysterese vollständig durchlaufen hat, nutzt man die volle Steilheit der Hysteresekurve am Meßpunkt (Punkt auf der Hysteresekurve zur Zeit t5) aus und hat so die höchstmögliche Empfindlichkeit erreicht. Insbesondere treten dabei keine Mikrohysteresen auf.

Es wird somit ein Meßverfahren angegeben, das es erlaubt, unter Ausschaltung der Mikrohysteresen die enorme Steilheit der Kurve im Phasenübergangsbereich zur Messung der Intensität einfallender Infrarotstrahlung zu nutzen.

Die beschriebene Meßmethode ist nicht auf die bolometrische Messung von Infrarotstrahlung beschränkt. Sie läßt sich allgemein anwenden auf Messungen, bei denen hysteretische Phasenübergänge (z.B. als Funktion von Magnetfeld, Temperatur) meßtechnisch ausgenutzt werden sollen.

## Patentansprüche

1. Sensorelement zur bolometrischen Messung der Intensität von Infrarotlicht, umfassend:
- ein wärmeleitfähiges Substrat (1);
- einen Meßwiderstand (5) aus einem Halbleiter-Metall-Phasenübergangsmaterial, der von dem Substrat (1) durch eine Wärmeisolationsschicht (6) getrennt ist,
- einen auf dem Substrat (1) aufgebrachten Referenzwiderstand (4) aus dem gleichen Material wie der Meßwiderstand (5),
- einen auf dem Substrat (1) aufgebrachten Heizwiderstand (2),
- einen auf dem Substrat (1) aufgebrachten Widerstand (3) zur Temperaturmessung.

2. Sensorelement nach Anspruch 1, dadurch gekennzeichnet, daß auf dem Meßwiderstand (5) eine Infrarotlicht absorbierende Schicht aufgebracht ist.

3. Sensorelement nach Anspruch 1 oder 2, dadurch gekennzeichnet, daß das Substrat (1) aus poliertem Si, Ge, Saphir, Diamant, SiC, SiN oder AlN besteht.

4. Sensorelement nach einem der Ansprüche 1 bis 3, dadurch gekennzeichnet, daß Meßwiderstand (5) und Referenzwiderstand (4) aus einem Material bestehen, dessen elektrische Leitfähigkeit in einem Bereich zwischen 10² und 10⁶ Ω⁻¹cm⁻¹ variiert, wie z. B. VO₂ oder Ti₂O₃.

5. Sensorelement nach einem der vorangehenden Ansprüche, dadurch gekennzeichnet, daß der Heizwiderstand (2), der Widerstand (3) zur Temperaturmessung oder die Anschlußpads (7) für Meßwiderstand (5) oder Referenzwiderstand (4) aus Au, Pt, Pd, Al oder Cu bestehen.

6. Sensorelement nach einem der vorangehenden Ansprüche, dadurch gekennzeichnet, daß die Wärmeisolationsschicht (6) aus Polyimid, LaF₃ oder CsBr besteht.

7. Sensorelement nach einem der vorangehenden Ansprüche, dadurch gekennzeichnet, daß die Wärmeisolationsschicht (6) mindestens 10 µm dick ist.

8. Sensorelement nach einem der vorangehenden Ansprüche, dadurch gekennzeichnet, daß mehrere, von dem Substrat jeweils durch eine Wärmeisolationsschicht (6) getrennte Meßwiderstände (5) vorhanden sind.

9. Sensorelement nach Anspruch 8, dadurch gekennzeichnet, daß die Meßwiderstände ein Array zur bildgebenden IR-Messung bilden.

10. Verfahren zur bolometrischen Messung der Intensität von Infrarotlicht mit einem Sensorelement nach einem der vorangehenden Ansprüche, mit folgenden Verfahrensschritten:
- an Meßwiderstand (5) und Referenzwiderstand (4) wird ein Temperaturbereich periodisch durchlaufen, welcher den hysteretischen Phasenübergang des Phasenübergangsmaterials vollständig oder teilweise beinhaltet;
- an dem Zeitpunkt, zu dem der Referenzwiderstand (4) einen testen Punkt auf der Hysteresekurve einnimmt, der sich im Bereich der maximalen Steilheit der Hysteresekurve befindet, wird eine Messung des Widerstandswerts des Meßwiderstands (5) ausgelöst, wobei der Punkt auf der Hysteresekurve, den der Meßwiderstand (5) zum Zeitpunkt der Messung einnimmt, ein Maß für die Intensität des vom Meßwiderstand (5) absorbierten Infrarotlichts darstellt.

11. Verfahren nach Anspruch 10, dadurch gekennzeichnet, daß das periodische Durchlaufen des Temperaturbereichs mit einer Wiederholrate von 1 bis 10 Hz erfolgt.

12. Verfahren zur Messung einer äußeren Einflußgröße unter Ausnutzung eines hysteretischen Phasenübergangs einer ersten physikalischen Größe in Abhängigkeit von einer zweiten physikalischen Größe in einem Meßelement (5) und einem Referenzelement (4), wobei nur das Meßelement (5) der zu messenden äußeren Einflußgröße ausgesetzt ist, mit folgenden Verfahrensschritten:
- an Meßelement (5) und Referenzelement (4) wird ein Wertebereich der zweiten physikalischen Größe periodisch durchlaufen, welcher den hysteretischen Phasenübergang vollständig oder teilweise beinhaltet;
- an dem Zeitpunkt, zu dem das Referenzelement (4) einem vorgegebenen, festen Punkt auf der Hysteresekurve einnimmt, der sich im Bereich der maximalen Steilheit der Hysteresekurve befindet, wird eine Messung der ersten physikalischen Größe an dem Meßelement (5) ausgelöst, wobei der Punkt auf der Hysteresekurve, den das Meßelement (5) zum Zeitpunkt der Messung einnimmt, ein Maß für die äußere Einflußgröße darstellt.

13. Verfahren nach Anspruch 12, dadurch gekennzeichnet, daß die zweite physikalische Größe, von der die Hysterese abhängt, die Temperatur oder das Magnetfeld ist.
